# EUROPEAN PATENT SPECIFICATION

(11) **EP 4 120 614 B1**
(45) Date of publication and mention of the grant of the patent: **20.03.2024**
(21) Application number: 22194143.8
(22) Date of filing: 04.01.2017
(51) Int. Cl.: H04L 5/00, H04L 5/06

(54) **UL (UPLINK) CONTROL DESIGN FOR UNLICENSED SPECTRUM**
UL (UPLINK)-STEUERUNGSKONZEPT FÜR UNLIZENZIERTES SPEKTRUM
CONCEPTION DE COMMANDE DE LIAISON MONTANTE POUR SPECTRE SANS LICENCE

(30) Priority: 06.01.2016 US 201662275457 P; 13.01.2016 US 201662278323 P
(43) Date of publication of application: 18.01.2023
(62) Divisional of application: 21170418.4
(73) Proprietor: Apple Inc., Cupertino, CA 95014 (US)
(72) Inventor: BHORKAR, Abhijeet, Fremont, 94555 (US); KWON, Hwan-Joon, Santa Clara, CA, 95054 (US); YE, Qiaoyang, Fremont, CA, 94538 (US); JEON, Jeongho, San Jose, CA, 95134 (US); HAMIDI-SEPEHR, Fatemeh, Milpitas, CA, 95054 (US)
(74) Representative: Lang, Johannes

(56) References cited:
- US-A1- 2015 365 880
- QUALCOMM INCORPORATED: "Uplink Waveform for LAA", 3GPP DRAFT; R1-152790 - UPLINK WAVEFORM FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150425 - 20150429 16 May 2015 (2015-05-16), XP050971219, Retrieved from the Internet: URL:http://www.3gpp.org/ftp/tsg_ran/WG1_RL 1/TSGR1_81/Docs/ [retrieved on 2015-05-16]

## Description

### REFERENCE TO RELATED APPLICATIONS

This application claims the benefit of U.S. Provisional Applications No. 621275,457 filed January 6, 2016, entitled "UL CONTROL DESIGN FOR UNLICENSED SPECTRUM" and No. 62/278,323 filed January 13, 2016, entitled "UL CONTROL DESIGN FOR UNLICENSED SPECTRUM".

### FIELD

The present disclosure relates to wireless technology, and more specifically to designs for UL (uplink) control signaling in unlicensed spectrum Operation (e.g., MulteFire, 5G (Fifth Generation), etc.).

### BACKGROUND

LTE (Long Term Evolution) systems can operate in licensed spectrum and/or unlicensed spectrum. Apart from the licensed assisted LTE Operation for unlicensed spectrum considered in Rel-13 (LTE Release 13), LTE can also be operated via dual connectivity or the standalone LTE mode which may not require much assistance from the licensed spectrum. Recently, a new LTE-based technology (MulteFire) has been under consideration, requiring no assistance from the licensed spectrum to enable a leaner, self-contained network architecture that is suitable for neutral deployments where any deployment can service any device.

US 2015/365880 A1 describes a system for transmitting and receiving wireless communications over an unlicensed radio frequency spectrum band including transmitting system information blocks over the unlicensed radio frequency band.

US2015/0365880A1 describes a system for transmitting and receiving wireless communications over an unlicensed radio frequency spectrum band including transmitting system information blocks over the unlicensed radio frequency band.

### BRIEF DESCRIPTION OF THE DRAWINGS

**FIG. 1** is a block diagram illustrating an example user equipment (UE) useable in connection with various aspects described herein.
**FIG. 2** is a diagram illustrating an example sPUCCH (shortened ePUCCH (enhanced Physical Uplink Control Channel)) design, which can occupy 2, 3 or 4 symbol duration, according to various aspects discussed herein.
**FIG. 3** is a diagram illustrating an example scenario of sPUCCH transmission, according to various aspects discussed herein.
**FIG. 4** is a diagram illustrating an example ePUCCH design according to various aspects discussed herein.
**FIG. 5** is a diagram illustrating an example scenario showing long ePUCCH transmission according to various aspects discussed herein.
**FIG. 6** is a diagram illustrating a first option for SRS transmission according to various aspects discussed herein.
**FIG. 7** is a diagram illustrating a second option for SRS transmission according to various aspects discussed herein.
**FIG. 8** is a diagram illustrating a third option for SRS transmission according to various aspects discussed herein.
**FIG. 9** is a block diagram illustrating a system that facilitates communication of UCI (UL (Uplink) Control Information) by a UE (User Equipment) operating on an unlicensed frequency band, according to various aspects described herein.
**FIG. 10** is a block diagram illustrating a system that facilitates reception of UCI via an unlicensed spectrum by a base station, according to various aspects described herein.
**FIG. 11** is a flow diagram illustrating a method that facilitates transmission of UCI over an unlicensed spectrum by a UE, according to various aspects described herein.
**FIG. 12** is a flow diagram illustrating a method that facilitates reception of UCI over an unlicensed spectrum by a base station, according to various aspects described herein.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising."

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

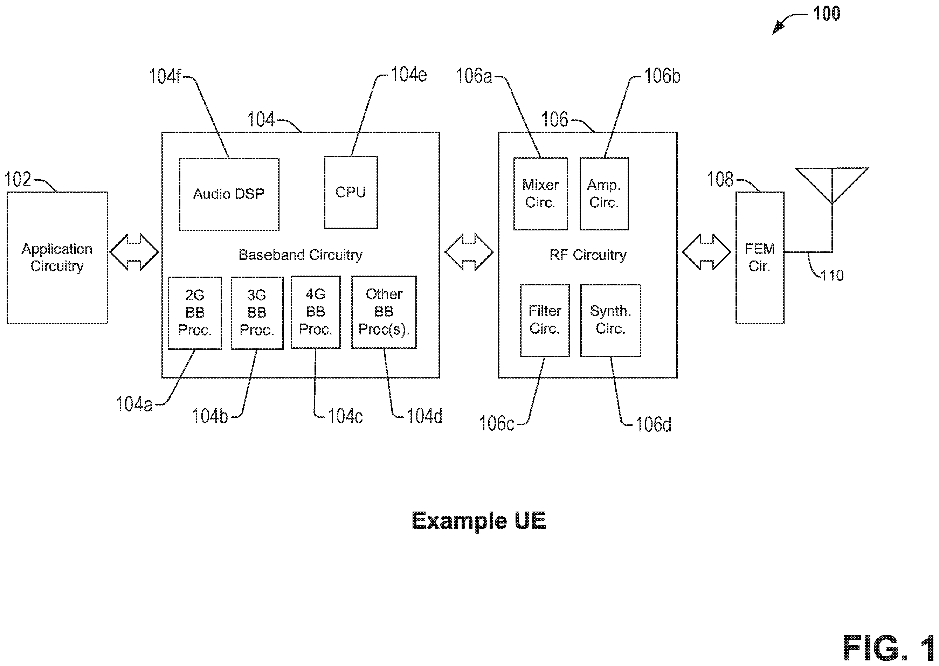

Embodiments described herein may be implemented into a system using any suitably configured hardware and/or software. FIG. 1 illustrates, for one embodiment, example components of a User Equipment (UE) device 100. In some embodiments, the UE device 100 may include application circuitry 102, baseband circuitry 104, Radio Frequency (RF) circuitry 106, front-end module (FEM) circuitry 108 and one or more antennas 110, coupled together at least as shown.

The application circuitry 102 may include one or more application processors. For example, the application circuitry 102 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 104 may include circuitry such as, but not limited to, one or more single-core or multi-core processors. The baseband circuitry 104 may include one or more baseband processors and/or control logic to process baseband signals received from a receive signal path of the RF circuitry 106 and to generate baseband signals for a transmit signal path of the RF circuitry 106. Baseband processing circuity 104 may interface with the application circuitry 102 for generation and processing of the baseband signals and for controlling operations of the RF circuitry 106. For example, in some embodiments, the baseband circuitry 104 may include a second generation (2G) baseband processor 104a, third generation (3G) baseband processor 104b, fourth generation (4G) baseband processor 104c, and/or other baseband processor(s) 104d for other existing generations, generations in development or to be developed in the future (e.g., fifth generation (5G), 6G, etc.). The baseband circuitry 104 (e.g., one or more of baseband processors 104a-d) may handle various radio control functions that enable communication with one or more radio networks via the RF circuitry 106. The radio control functions may include, but are not limited to, signal modulation/demodulation, encoding/decoding, radio frequency shifting, etc. In some embodiments, modulation/demodulation circuitry of the baseband circuitry 104 may include Fast-Fourier Transform (FFT), precoding, and/or constellation mapping/demapping functionality. In some embodiments, encoding/decoding circuitry of the baseband circuitry 104 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 104 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 104e of the baseband circuitry 104 may be configured to run elements of the protocol stack for signaling of the PHY, MAC, RLC, PDCP and/or RRC layers. In some embodiments, the baseband circuitry may include one or more audio digital signal processor(s) (DSP) 104f. The audio DSP(s) 104f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 104 and the application circuitry 102 may be implemented together such as, for example, on a system on a chip (SOC).

In some embodiments, the baseband circuitry 104 may provide for communication compatible with one or more radio technologies. For example, in some embodiments, the baseband circuitry 104 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 104 is configured to support radio communications of more than one wireless protocol may be referred to as multi-mode baseband circuitry.

RF circuitry 106 may enable communication with wireless networks using modulated electromagnetic radiation through a non-solid medium. In various embodiments, the RF circuitry 106 may include switches, filters, amplifiers, etc. to facilitate the communication with the wireless network. RF circuitry 106 may include a receive signal path which may include circuitry to down-convert RF signals received from the FEM circuitry 108 and provide baseband signals to the baseband circuitry 104. RF circuitry 106 may also include a transmit signal path which may include circuitry to up-convert baseband signals provided by the baseband circuitry 104 and provide RF output signals to the FEM circuitry 108 for transmission.

In some embodiments, the RF circuitry 106 may include a receive signal path and a transmit signal path. The receive signal path of the RF circuitry 106 may include mixer circuitry 106a, amplifier circuitry 106b and filter circuitry 106c. The transmit signal path of the RF circuitry 106 may include filter circuitry 106c and mixer circuitry 106a. RF circuitry 106 may also include synthesizer circuitry 106d for synthesizing a frequency for use by the mixer circuitry 106a of the receive signal path and the transmit signal path. In some embodiments, the mixer circuitry 106a of the receive signal path may be configured to down-convert RF signals received from the FEM circuitry 108 based on the synthesized frequency provided by synthesizer circuitry 106d. The amplifier circuitry 106b may be configured to amplify the down-converted signals and the filter circuitry 106c may be a low-pass filter (LPF) or band-pass filter (BPF) configured to remove unwanted signals from the down-converted signals to generate output baseband signals. Output baseband signals may be provided to the baseband circuitry 104 for further processing. In some embodiments, the output baseband signals may be zero-frequency baseband signals, although this is not a requirement. In some embodiments, mixer circuitry 106a of the receive signal path may comprise passive mixers, although the scope of the embodiments is not limited in this respect.

In some embodiments, the mixer circuitry 106a of the transmit signal path may be configured to up-convert input baseband signals based on the synthesized frequency provided by the synthesizer circuitry 106d to generate RF output signals for the FEM circuitry 108. The baseband signals may be provided by the baseband circuitry 104 and may be filtered by filter circuitry 106c. The filter circuitry 106c may include a low-pass filter (LPF), although the scope of the embodiments is not limited in this respect.

In some embodiments, the mixer circuitry 106a of the receive signal path and the mixer circuitry 106a of the transmit signal path may include two or more mixers and may be arranged for quadrature downconversion and/or upconversion respectively. In some embodiments, the mixer circuitry 106a of the receive signal path and the mixer circuitry 106a of the transmit signal path may include two or more mixers and may be arranged for image rejection (e.g., Hartley image rejection). In some embodiments, the mixer circuitry 106a of the receive signal path and the mixer circuitry 106a may be arranged for direct downconversion and/or direct upconversion, respectively. In some embodiments, the mixer circuitry 106a of the receive signal path and the mixer circuitry 106a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 106 may include analog-to-digital converter (ADC) and digital-to-analog converter (DAC) circuitry and the baseband circuitry 104 may include a digital baseband interface to communicate with the RF circuitry 106.

In some dual-mode embodiments, a separate radio IC circuitry may be provided for processing signals for each spectrum, although the scope of the embodiments is not limited in this respect.

In some embodiments, the synthesizer circuitry 106d may be a fractional-N synthesizer or a fractional N/N+1 synthesizer, although the scope of the embodiments is not limited in this respect as other types of frequency synthesizers may be suitable. For example, synthesizer circuitry 106d may be a delta-sigma synthesizer, a frequency multiplier, or a synthesizer comprising a phase-locked loop with a frequency divider.

The synthesizer circuitry 106d may be configured to synthesize an output frequency for use by the mixer circuitry 106a of the RF circuitry 106 based on a frequency input and a divider control input. In some embodiments, the synthesizer circuitry 106d may be a fractional N/N+1 synthesizer.

In some embodiments, frequency input may be provided by a voltage controlled oscillator (VCO), although that is not a requirement. Divider control input may be provided by either the baseband circuitry 104 or the applications processor 102 depending on the desired output frequency. In some embodiments, a divider control input (e.g., N) may be determined from a look-up table based on a channel indicated by the applications processor 102.

Synthesizer circuitry 106d of the RF circuitry 106 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 106d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 106 may include an IQ/polar converter.

FEM circuitry 108 may include a receive signal path which may include circuitry configured to operate on RF signals received from one or more antennas 110, amplify the received signals and provide the amplified versions of the received signals to the RF circuitry 106 for further processing. FEM circuitry 108 may also include a transmit signal path which may include circuitry configured to amplify signals for transmission provided by the RF circuitry 106 for transmission by one or more of the one or more antennas 110.

In some embodiments, the FEM circuitry 108 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 106). The transmit signal path of the FEM circuitry 108 may include a power amplifier (PA) to amplify input RF signals (e.g., provided by RF circuitry 106), and one or more filters to generate RF signals for subsequent transmission (e.g., by one or more of the one or more antennas 110.

In some embodiments, the UE device 100 may include additional elements such as, for example, memory/storage, display, camera, sensor, and/or input/output (I/O) interface.

Additionally, although the above example discussion of device 100 is in the context of a UE device, in various aspects, a similar device can be employed in connection with a base station (BS) such as an Evolved NodeB (eNB), etc.

Aspects discussed herein can relate to UL (uplink) control signaling for unlicensed spectrum systems. For example, embodiments discussed herein can relate to future releases of LTE (e.g., Rel-14, etc.), standalone systems such as MulteFire, and 5G systems.

UL control signaling can comprise UCI (Uplink Control Information), which can comprise Channel Quality Information (CQI), Scheduling Request (SR) and Hybrid Automatic Repeat Request (HARQ) acknowledgement (ACK) information. UCI can be carried by PUCCH (Physical Uplink Control Channel) and/or PUSCH (Physical Uplink Shared Channel). In MulteFire operation, UCI can be transmitted on the unlicensed PCell (Primary Cell)/SCell (Secondary Cell) and can be subject to LBT (Listen Before Talk). Thus, the design of UCI transmission can be done in a way that enables reliable transmission of feedback information given the further constraint on the UE (User Equipment) processing latency for PDSCH (Physical Downlink Shared Channel) decoding. The legacy PUCCH design spans 13-14 symbols and the transmission is aligned to the PCell subframe boundary. Due to the asymmetry in the DL (downlink) and UL traffic volume, there can be many occasions where only PUCCH is transmitted without PUSCH. Legacy PUCCH transmission spanning over the entire subframe duration of 1 ms, for HARQ ACK feedback, periodic CSI (Channel State Information) feedback and SR (Scheduling Request) could create an undesirably long blocking on the unlicensed spectrum, which can prevent other incumbents (e.g., Wi-Fi, etc.) from accessing the system during the time. Thus, a short ePUCCH (enhanced PUCCH), sPUCCH, spanning 1-4 symbols can be considered in addition to long ePUCCH.

In Legacy LTE, the SRSs (Sounding Reference Signals) are primarily transmitted for UL channel estimation. Conventional SRS transmissions are in the last SC (Single Carrier)-FDMA (Frequency Division Multiple Access) symbol in the configured subframes, which can be indicated by cell-specific broadcast signaling. In various aspects discussed herein, different options for SRS transmissions can be employed for unlicensed (e.g., MulteFire, etc.) operation.

Various embodiments discussed herein relate to transmission of UCI and/or SRS in unlicensed (e.g., MulteFire, etc.) operation.

### PUCCH Design and Signaling

The sPUCCH and long ePUCCH for MulteFire operation can employ the B-IFDMA (Block-Interleaved FDMA) design where user data can be placed on interlaced RBs (e.g., wherein an interlace can comprise a set of N (e.g., 10, etc.) non-contiguous RBs equally spaced in the frequency domain) and can be frequency multiplexed.

### sPUCCH

### sPUCCCH Design

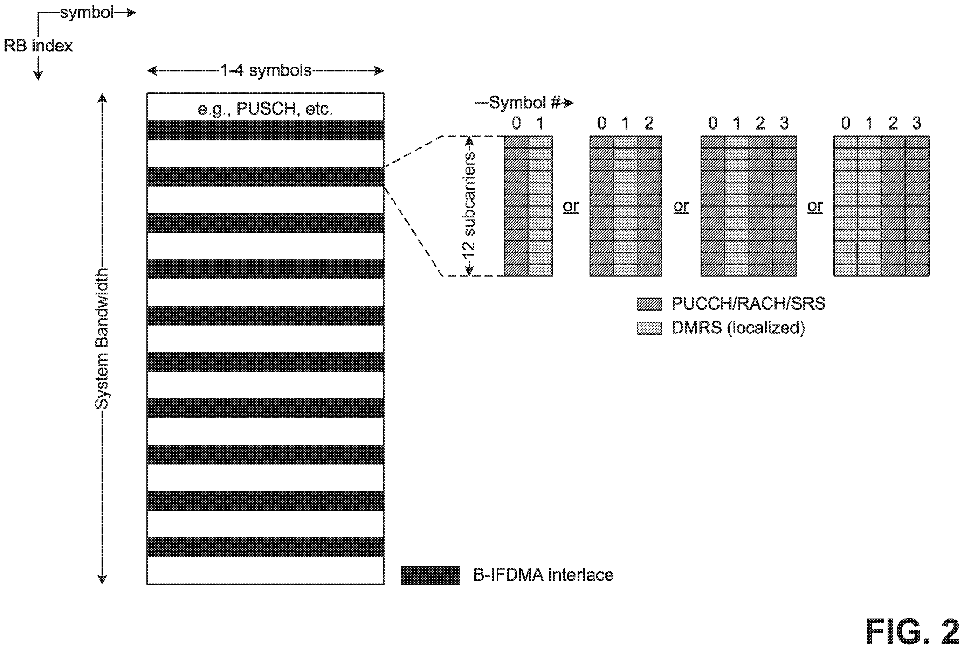

The short ePUCCH (sPUCCH) can span a 1-4 (e.g., 4) symbol duration interlaced over the system bandwidth, in contrast to conventional PUCCH, which can employ one or two contiguous (e.g., non-interlaced) chunks of resources for PUCCH. Referring to **FIG. 2****,** illustrated is a diagram of an example sPUCCH design, which can occupy 2, 3 or 4 symbol duration, according to various aspects discussed herein. The reference symbols and PUCCH can be time multiplexed, as shown on the right in FIG. 2. As one example embodiments, shown on the far right, 4 symbols can be employed, with symbols 0 and 1 used for DMRS (Demodulation Reference Signals), and symbols 2 and 3 for PUCCH/RACH (Random Access Channel)/SRS (Sounding Reference Signal). In some aspects, the number of symbols within sPUCCH can be dynamically indicated via common PDCCH (Physical Downlink Control Channel) or semi-statically indicated via RRC (Radio Resource Control) signaling. In other aspects, the number of sPUCCH symbols (e.g., 4 symbols, etc.) can be predefined (e.g., in a specification, etc.).

In various aspects, sPUCCH from multiple UEs can be multiplexed within each interlace with code domain multiplexing by applying different orthogonal cover codes (OCCs).

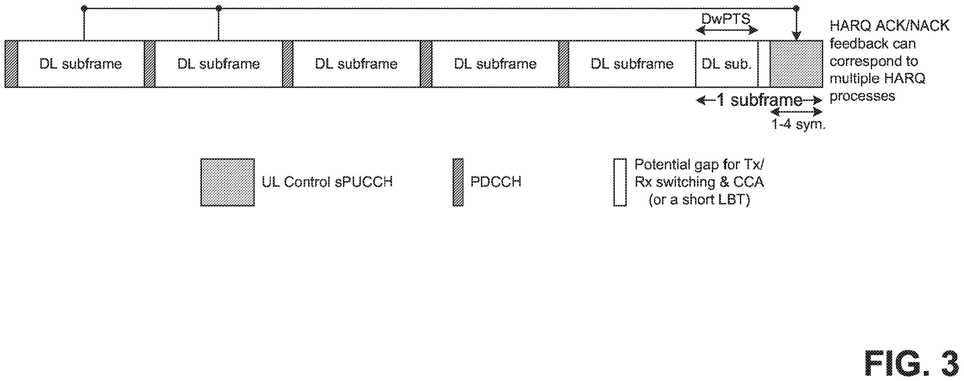

Referring to **FIG. 3****,** illustrated is a diagram showing an embodiment of sPUCCH transmission, according to the invention. The sPUCCH transmission spans the last n (e.g., 4, etc.) symbols of a subframe, wherein the first 14-n symbols (for normal CP (cyclic prefix) can be employed for uses other than UL transmission. In the example scenario of FIG. 3, sPUCCH can convey HARQ ACK feedback corresponding to PDSCH transmissions in previous DL bursts. According to the invention, a 1 symbol gap before sPUCCH transmission is considered for performing LBT and Z can be considered for radio turnaround time, or for Tx (transmission)/Rx (reception) switching and CCA (Clear Channel Assessment). In other illustrative examples not covered by the claims, LBT can be performed or not performed. For example, if UL transmission follows DL transmission within a predetermined time (e.g., 16 µs), LBT can be omitted, and can be employed in other scenarios. For example, an eNB (Evolved NodeB) can optionally provide for a non-LBT option, can schedule DL and UL transmissions to maintain a gap of less than or equal to the predetermined time, and can configure the UE to perform LBT if the gap exceeds the predetermined time.

### sPUCCH Signaling

In some aspects, the presence of sPUCCH after the end of DL burst can be dynamically indicated by a common signaling via PDCCH transmission. For example, Rel-13 LAA signaling can be reused, which can indicate the number of symbols in a current and next subframe. In the same or other aspects, the presence of sPUCCH can be implicitly indicated if a determined size (e.g., 4 symbols) of sPUCCH can be successfully fit into the remaining symbols of the last partial subframe.

The sPUCCH resources can be dynamically assigned or can be semi-statically configured via higher layer (e.g., RRC, etc.) signaling.

In legacy LTE design, PUCCH resources are dynamically allocated to a UE based upon the lowest control channel element (CCE) index of a signal transmitted on the PDCCH by the eNB. Because the PDCCH transmission is unique to a given UE, the use of the CCE index can guarantee unique assignments to the PUCCH resources. In aspects, due to the uncertainly and the TDD nature of the MulteFire system, sPUCCH can indicate HARQ ACK feedback that can corresponding to multiple DL HARQ processes, as shown in FIG. 3. In such scenarios, there may not be one-to-one mapping of the CCE to PUCCH resource. In such aspects, the CCE index can be defined with respect to the first subframe in DL burst. Every subframe can indicate the CCE index from the start of the DL burst via common control signaling. Thus, in such scenarios, one-to-one mapping between CCE and PUCCH is possible. Alternatively, RRC signaling can be used to pre-allocate the resources for the PUCCH transmission.

### sPUCCH contents

In various aspects, sPUCCH can comprise one or more of HARQ ACK feedback, CSI feedback (e.g., periodic CSI), or SRS.

For example, sPUCCH can be used to indicate HARQ ACK feedback corresponding to one or more DL HARQ processes. In aspects, the number of DL HARQ processes can be at least as many as the number of allowed consecutive DL subframes for continuous transmission, as during these consecutive DL subframes, there is no feedback available to make any decision on retransmissions.

As discussed in LAA Rel-13, the MCOT (Maximum Channel Occupancy Time) can be 8 ms or 10 ms depending on the regulatory region. The total number of ACK/NACK bits corresponding for all HARQ processes can be up to 10 bits per codeword. Thus, in principle, sPUCCH can feedback a total of 10 bits per codeword (or 20 bits for 2 codewords). With spatial HARQ ACK bundling, the maximum number of bits to be transmitted for HARQ feedback can be constrained to 10 bits.

Additionally, a UE can perform periodic CSI feedback transmission and/or a 1 bit SR transmission. Conventional LTE CSI feedback is limited to 11 bits. Thus, the maximum number of bits to be transmitted can be 32 (20+11+1) bits within each sPUCCH. With HARQ ACK bundling, the number of bits to be transmitted can be limited to 21 (10+11+1) bits.

### Periodic sPUCCH

Periodic sPUCCH can improve opportunities for HARQ ACK and CSI transmission without additional DL control overhead. In various embodiments, periodic sPUCCH can be employed. As examples, the periodicity for sPUCCH can be set as 20ms, 40ms or 80ms. In various aspects, periodic PUCCH transmission can be subject to one or more of the following conditions. First, a periodic PUCCH transmission can be omitted if it overlaps with the ongoing PDSCH transmission. If periodic sPUCCH overlaps with PUSCH or dynamic sPUCCH transmission then periodic sPUCCH can also be omitted. A common PDCCH can be used used to indicate if periodic sPUCCH is not transmitted. Second, periodic sPUCCH can be preceded by single interval LBT to avoid collisions with ongoing transmissions.

### Long ePUCCH

### Long ePUCCH Design

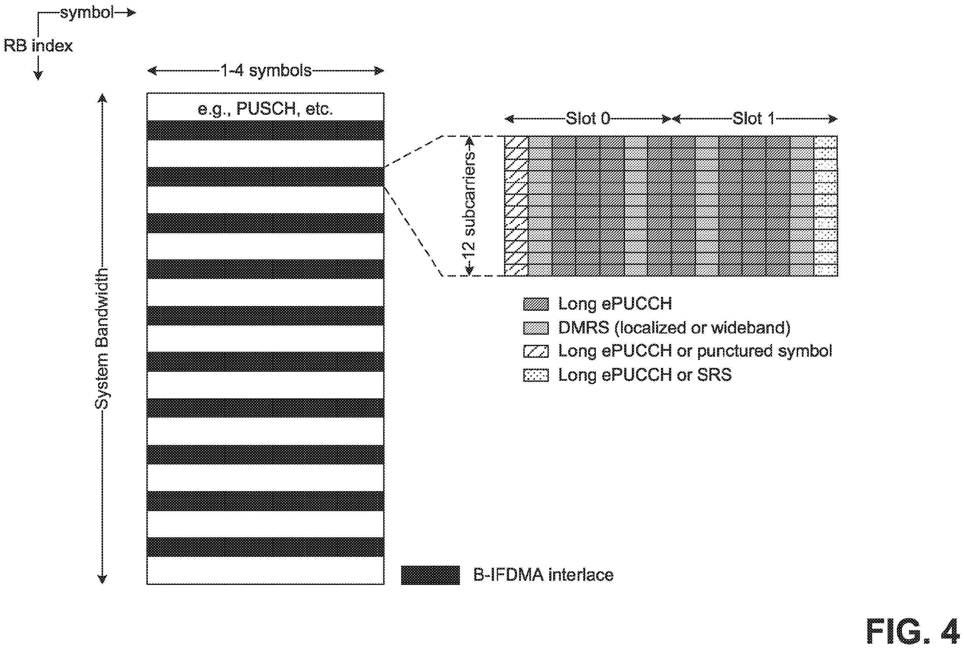

In various aspects, long ePUCCH can span 12-14 symbols in the time domain and can span the system bandwidth by occupying one of the interlaces (e.g., 10 non-contiguous RBs equally spaced in the frequency domain). Long ePUCCH can be frequency multiplexed with PUSCH transmission of the same or a different UE anchored at the same eNB. The duration and starting position of the ePUCCH can depend on the presence of the SRS transmission and/or puncturing for performing LBT before PUSCH transmission. As an example, if SRS is transmitted in the last symbol of PUSCH and first symbol of PUSCH is punctured, then the duration of long ePUCCH can be 12 symbols occupying symbols number 1-12 of the uplink subframe. Referring to FIG. 4, illustrated is a diagram of an example ePUCCH design according to various aspects discussed herein. As shown in FIG. 4, the reference signals and data symbols for PUCCH can be time multiplexed. Additionally, similar to legacy PUCCH format 213, FIG. 4 shows an example wherein DMRS can be located at symbols 1 and 5 of each slot.

### Long ePUCCH Signaling

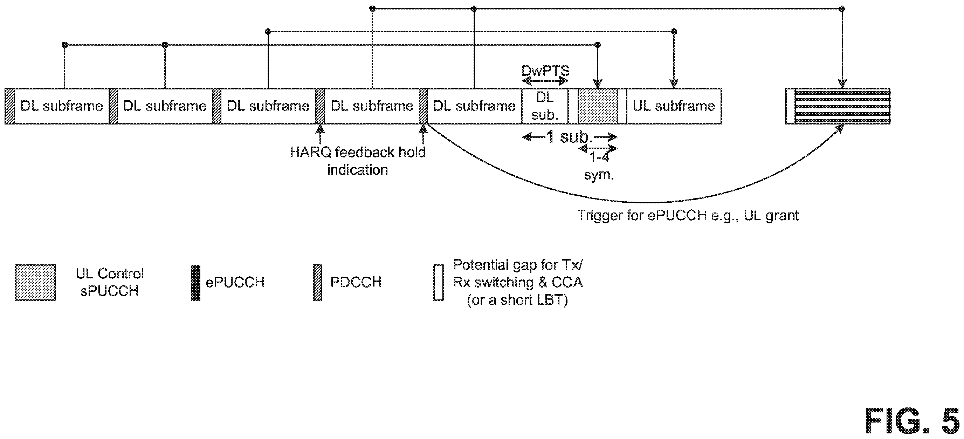

Referring to **FIG. 5****,** illustrated is an example scenario showing long ePUCCH transmission according to various aspects discussed herein. As shown in FIG. 5, the presence of long ePUCCH resources can be explicitly indicated via common signaling. Additionally a presence of UL grant in number n, can also indicate that long ePUCCH can be transmitted along with PUSCH transmission on subframe n+k, wherein k can be 4 as in conventional LTE systems, or can be configured (e.g., via DCI (downlink control information), etc.), for example, to be 4-16, etc. Resources for HARQ ACK feedback can be explicitly indicated dynamically or can be configured a priori based on the RRC configuration.

### Long ePUCCH Contents

For unlicensed system (e.g., MulteFire, etc.) designs in various aspects, the long ePUCCH can indicate the HARQ ACK feedback of the pending DL HARQ processes, for example, those that could not have been transmitted in the sPUCCH due to PDSCH decoding delay. In various aspects, the long ePUCCH can solely be used for the transmission of HARQ ACK feedback corresponding to the maximum HARQ processes requiring 10 bits per codeword (thus, in such aspects, long PUCCH can omit SR and periodic CSI, e.g., which can be transmitted solely via sPUCCH).

### SRS Design

In various aspects, SRS transmission can be according to one of three options, each of which can be employed in various embodiments.

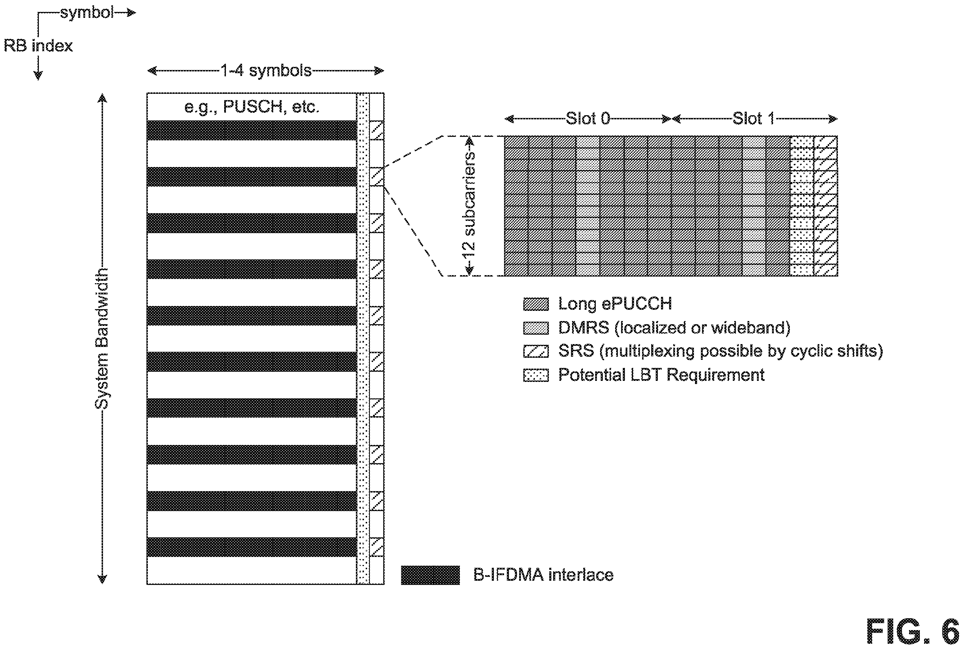

In the first option for SRS transmission, SRS can be transmitted on the last symbol of an uplink subframe. Referring to FIG. 6, illustrated is a diagram of a first option for SRS transmission according to various aspects discussed herein. SRS (when configured) can be transmitted on the last symbol similarly to SRS transmission in LTE release 8, and can be time multiplexed with PUSCH or long ePUCCH. This design can use an interlaced structure for transmission of SRS. Multiple UEs can be multiplexed in a given interlace via different cyclic shifts of the SRS sequence. If this option is employed, however, either an additional LBT can be performed before transmission of SRS, or the SRS transmissions can be only allowed from those UEs who are scheduled to transmit PUSCH or ePUCCH in the same subframe. In various aspects of the first option, SRS transmission can be restricted to UEs transmitting during the previous symbols, such that the second to last symbol can be used for UL transmission, instead of for LBT.

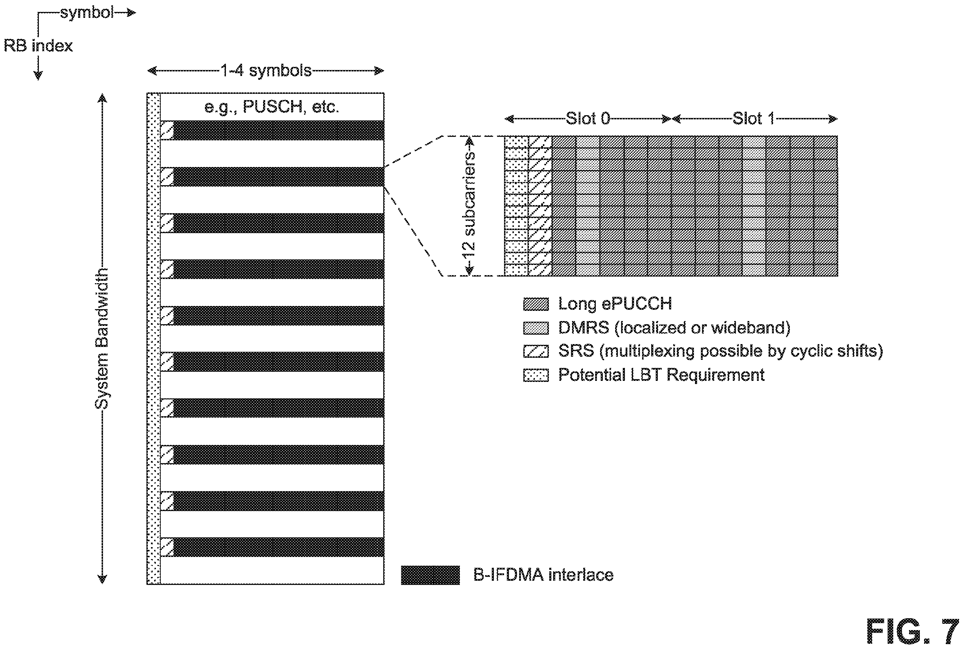

In the second option for SRS transmission, SRS can be transmitted on first symbol of the uplink subframe and can be time multiplexed with PUSCH or long ePUCCH. Referring to FIG. 7, illustrated is a diagram of a second option for SRS transmission according to various aspects discussed herein. SRS transmission according to this option can be preceded by a short LBT. If the UEs configured for SRS transmission are not scheduled within the uplink subframe, a reservation signal can be transmitted on the first symbol by the scheduled UEs. The reservation signal can be common to all UEs and one of the cyclic shifts of the SRS transmission can be reserved so that the eNB can correctly perform channel estimation on the uplink.

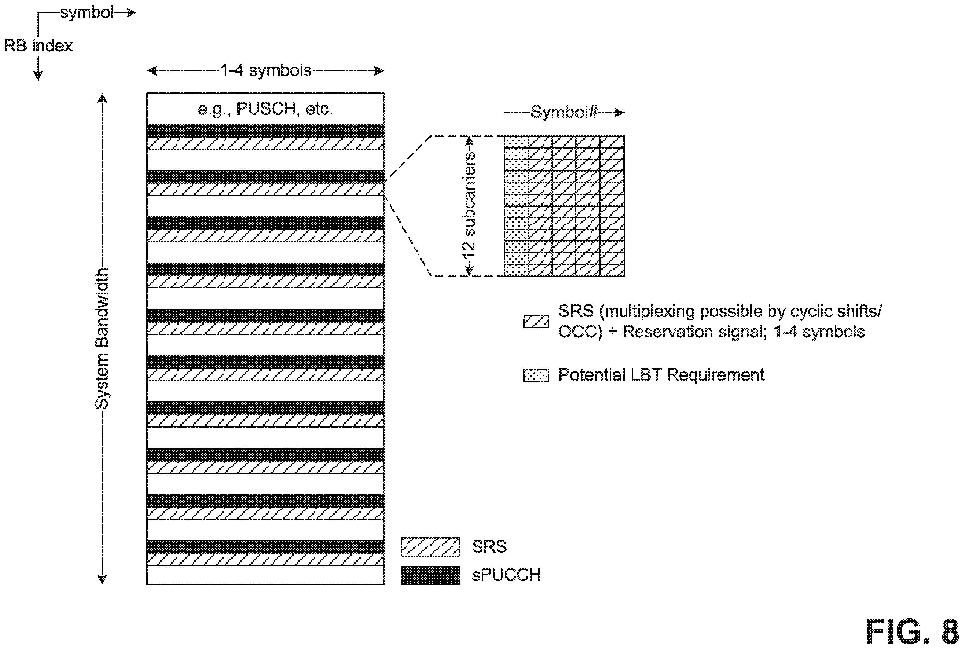

In the third option for SRS transmission, SRS can be multiplexed on one of the B-IFDMA interlaces with sPUCCH. Referring to FIG. 8, illustrated is a diagram of a third option for SRS transmission according to various aspects discussed herein. In the third option, similar to the second option, LBT can be performed before the transmission of sPUCCH resources. In the third option, SRS can be 1-4 symbols, with FIG. 8 showing an example with 4 symbols for SRS. If the UEs configured for SRS transmission are not scheduled within the following uplink subframe, a reservation signal can be transmitted on the first symbol by the scheduled UEs. The reservation signal can be common to all UEs and one of the cyclic shift of the SRS transmission can be reserved so that eNB can correctly perform channel estimation on the uplink.

### Additional Embodiments

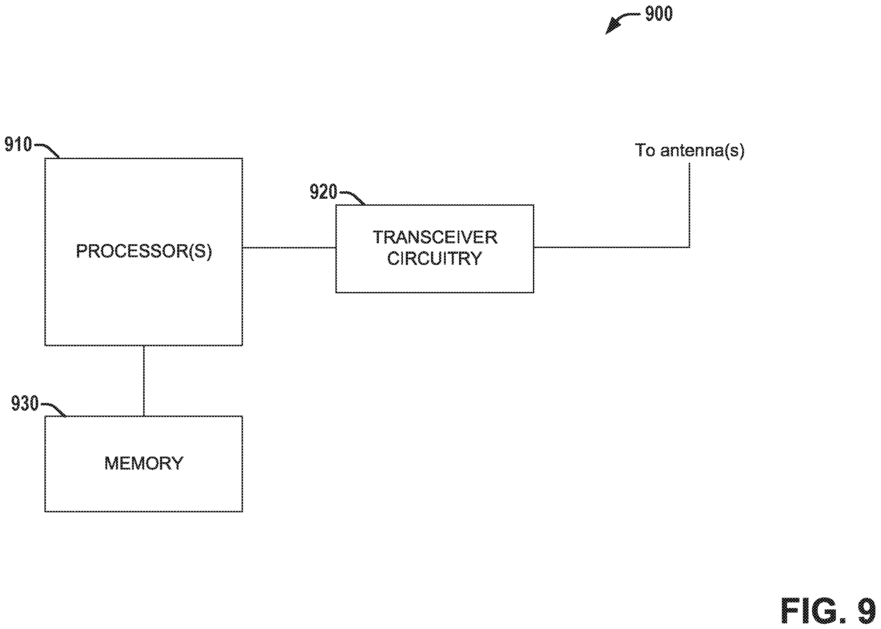

Referring to **FIG. 9****,** illustrated is a block diagram of a system 900 that facilitates communication of UCI (UL (Uplink) Control Information) by a UE (User Equipment) operating on an unlicensed frequency band, according to various aspects described herein. System 900 can include one or more processors 910 (e.g., one or more baseband processors such as one or more of the baseband processors discussed in connection with FIG. 1), transceiver circuitry 920 (e.g., comprising one or more of transmitter circuitry or receiver circuitry, which can employ common circuit elements, distinct circuit elements, or a combination thereof), and a memory 930 (which can comprise any of a variety of storage mediums and can store instructions and/or data associated with one or more of processor(s) 910 or transceiver circuitry 920). In various aspects, system 900 can be included within a user equipment (UE). As described in greater detail below, system 900 can facilitate transmission of short or long ePUCCH (enhanced Physical Uplink Control Channel) via an interlace of the unlicensed spectrum.

Processor(s) 910 can generate an ePUCCH, which can be a sPUCCH (shortened ePUCCH) or a long ePUCCH, depending on the scenario. sPUCCH and long ePUCCH generated by processor(s) 910 can be as described herein, for example, with a length of 1-4 symbols (e.g., 4) for sPUCCH and 12-14 symbols for long ePUCCH, comprising one or more of HARQ ACK feedback, CSI feedback, or SR. For example, in various aspects, for example, sPUCCH or long ePUCCH can be generated based on messaging received by transceiver circuitry 920 (and processed by processor(s) 910) from a base station (e.g., eNB, etc.). In the same or other aspects, the messaging can be PDCCH (Physical Downlink Control Channel) messaging that dynamically schedules the sPUCCH or long ePUCCH generated by processor(s) 910. In other aspects, sPUCCH can be generated by processor(s) 910 based on a periodic sPUCCH configuration (e.g., configured via higher layer signaling, etc.). Additionally or alternatively, sPUCCH can be generated by processor(s) 910 based on sufficient symbols remaining in a subframe for transmission of sPUCCH. In scenarios wherein sPUCCH is generated by processor(s) 910 processing received messaging, depending on the type of received signal or message, processing (e.g., by processor(s) 910, processor(s) 1010, etc.) can comprise one or more of: identifying physical resources associated with the signal/message, detecting the signal/message, resource element group deinterleaving, demodulation, descrambling, and/or decoding.

In various aspects, the ePUCCH generated by processor(s) 910 can be generated in an interlace (e.g., non-contiguous 10 RBs equally spaced in the frequency domain) of the unlicensed frequency band. Regulations of some jurisdictions can specify minimum bandwidths to be occupied by devices occupying unlicensed frequency bands (e.g., 80% minimum), and transmitting ePUCCH (and PUSCH, etc.) via interlaces instead of one or two continuous groups of RBs can ensure these specified minimums are met.

For sPUCCH and long ePUCCH, processor(s) 910 can also generate reference signals (e.g., DM-RS) that can be transmitted in one or more of the symbols of the ePUCCH (sPUCCH and/or long ePUCCH). Various examples are illustrated in FIGS. 2 and 4 (e.g., sPUCCH with DM-RS in the first two symbols, long ePUCCH with DM-RS in the second and fifth symbols of each slot, etc.), although additional configurations are also possible. In various aspects, the ePUCCH can comprise up to 32 bits, as discussed herein, which can comply with the maximum number of bits for CSI feedback in conventional LTE systems. In other aspects, a greater number of bits can be employed.

Processor(s) 910 can generate a UCI message for transmission via the ePUCCH, which can include HARQ ACK feedback, CSI feedback, and/or SR generated by processor(s) 910. In some aspects, long ePUCCH can comprise only HARQ ACK feedback, while sPUCCH can comprise any of HARQ ACK feedback, CSI feedback, and/or SR, while in other aspects, either of sPUCCH or long ePUCCH can comprise any of HARQ ACK feedback, CSI feedback, and/or SR. Processor(s) 910 can map the UCI message to symbols of the interlace allocated for the ePUCCH not employed for reference signals (e.g., with DM-RS in the first two symbols of a four symbol sPUCCH, the final two symbols can be employed for UCI messaging, etc.).

Transceiver circuitry 920 can transmit the ePUCCH and/or reference signals to a serving base station (e.g., eNB). Depending on the type of signal or message generated, outputting for transmission (e.g., by processor(s) 910, processor(s) 1010, etc.) can comprise one or more of the following: generating a set of associated bits that indicate the content of the signal or message, coding (e.g., which can include adding a cyclic redundancy check (CRC) and/or coding via one or more of turbo code, low density parity-check (LDPC) code, tailbiting convolution code (TBCC), etc.), scrambling (e.g., based on a scrambling seed), modulating (e.g., via one of binary phase shift keying (BPSK), quadrature phase shift keying (QPSK), or some form of quadrature amplitude modulation (QAM), etc.), and/or resource mapping (e.g., to a scheduled set of resources, to a set of time and frequency resources granted for uplink transmission, etc.).

In some aspects, processor(s) 910 can perform LBT prior to transmission of the ePUCCH by transceiver circuitry 920, while in others, transmission can follow DL transmission in a short enough interval (e.g., 16 µs or less, etc.) that LBT can be omitted. In various aspects, configuration messaging can be received by transceiver circuitry 920 and processed by processor(s) 910 configuring processor(s) 910 to generate the UCI and/or reference signals for transmission within such an interval, and processor(s) 910 can omit the LBT if transmission will occur within that interval. Alternatively, if not configured in such a manner or if the interval is exceeded, processor(s) 910 can perform LBT (e.g., for 1 symbol, etc.), and transceiver circuitry 920 can transmit if the channel is clear.

In various aspects, processor(s) 910 can generate SRS (Sounding Reference Signals) that can be transmitted by transceiver circuitry 920. The SRS can be multiplexed with the ePUCCH in time and/or frequency, for example, according to one of the options discussed herein for SRS transmission, which can be done via one to four symbols of the subframe. For example, the SRS can be transmitted preceding or following long ePUCCH within the same subframe and interlace as the ePUCCH, or different frequency resources can be employed for transmission of the ePUCCH and SRS. Various examples are shown in FIGS. 6-8.

Additionally, in aspects, processor(s) 910 can generate UL data for transmission to the eNB by transceiver circuitry 920. Processor(s) 910 can generate the UL data for transmission by transceiver circuitry 920 via one or more additional interlaces (e.g., which can each be 10 non-contiguous RBs equally spaced in the frequency domain) that are distinct from the interlace for the ePUCCH. Thus, processor(s) 910 can frequency multiplex the ePUCCH with PUSCH via distinct interlaces.

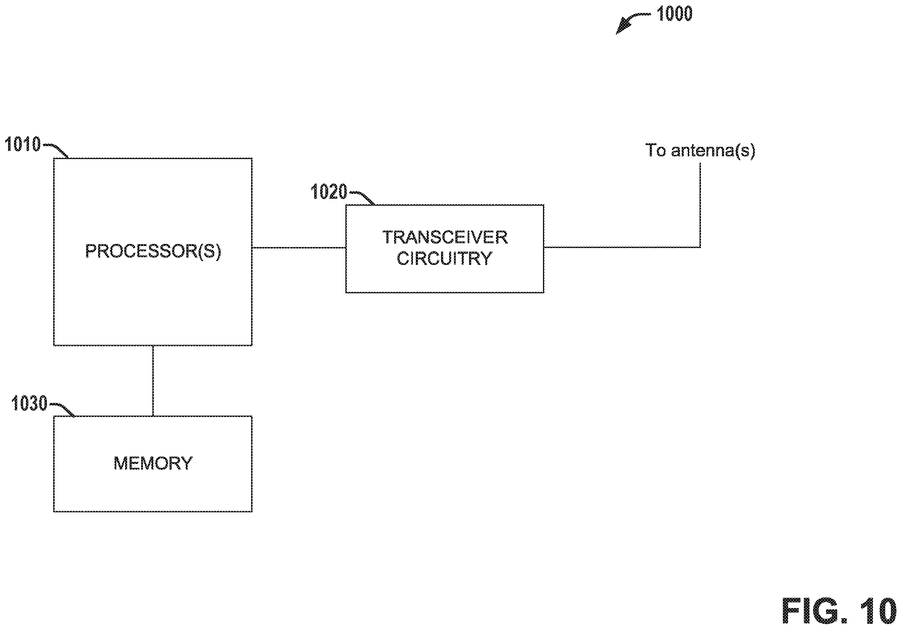

Referring to **FIG. 10****,** illustrated is a block diagram of a system 1000 at a base station that facilitates reception of UCI via an unlicensed spectrum by a base station, according to various aspects described herein. System 1000 can include one or more processors 1010 (e.g., one or more baseband processors such as one or more of the baseband processors discussed in connection with FIG. 1), transceiver circuitry 1020 (e.g., which can comprise one or more of transmitter circuitry (e.g., associated with one or more transmit chains) or receiver circuitry (e.g., associated with one or more receive chains), wherein the transmitter circuitry and receiver circuitry can employ common circuit elements, distinct circuit elements, or a combination thereof), and memory 1030 (which can comprise any of a variety of storage mediums and can store instructions and/or data associated with one or more of processor(s) 1010 or transceiver circuitry 1020). In various aspects, system 1000 can be included within an Evolved Universal Terrestrial Radio Access Network (E-UTRAN) Node B (Evolved Node B, eNodeB, or eNB) or other base station in a wireless communications network. In some aspects, the processor(s) 1010, transceiver circuitry 1020, and the memory 1030 can be included in a single device, while in other aspects, they can be included in different devices, such as part of a distributed architecture. As described in greater detail below, system 1000 can facilitate configuration of one or more UEs to transmit ePUCCH and PUSCH via interlaces of an unlicensed frequency band.

Processor(s) 1010 can generate, and transceiver circuitry 1020 can transmit, a first set of messaging that can configure resources (e.g., time (e.g., number of symbols, etc.) and/or frequency (e.g., interlace(s)) for ePUCCH (and PUSCH) for the one or more UEs. Processor(s) 1010 can assign ePUCCH and PUSCH to distinct interlaces. This messaging can comprise PDCCH messaging (e.g., DCI) and/or higher layer signaling (e.g., RRC, etc.). Additionally, processor(s) 1010 can generate a second set of messaging (e.g., DCI, higher layer, etc.) that can indicate when the one or more UEs should generate ePUCCH (e.g., sPUCCH of 1-4 symbols and/or long ePUCCH of 12-14 symbols). In other aspects, the one or more UEs can be configured to automatically generate sPUCCH in certain circumstances (e.g., sufficient symbols (e.g., N, for N=4, etc.) remaining in a final partial subframe of a DL burst subframe following a DwPTS of 14-N (if no LBT) or 13-N (with LBT), etc.), or such behavior can be predefined. In some such aspects, processor(s) 1010 can generate (and transceiver circuitry 1020 can transmit) messaging to prevent such automatic sPUCCH in some scenarios.

Based on the configured resources, processor(s) 1010 can determine which interlace(s) and subframe(s) are associated with ePUCCH from which UE(s) of the one or more UEs. Transceiver circuitry 1020 can receive the ePUCCH (e.g., sPUCCH, long ePUCCH) via the determined resources, which processor(s) 1010 can decode signaling received via the ePUCCH to determine UCI message(s) from the UE(s). The UCI message(s) can comprise HARQ ACK feedback, CSI feedback, and/or SR(s) from the UE(s).

Additionally, transceiver circuitry 1020 can receive additional signaling via other interlaces than the ePUCCH interlace(s), which can comprise PUSCH from the UE(s). Processor(s) 1010 can process (e.g., demodulate, et.) the additional signaling to recover UL data transmitted by the UE(s) via PUSCH.

Additionally, transceiver circuitry 1020 can receive and processor(s) 1010 can process SRS received from the UE(s). In various aspects, the SRS can be multiplexed in time and/or frequency with the ePUCCH (e.g., with long ePUCCH), according to any of the options for SRS transmission discussed herein (e.g., in the second symbol or final symbol of a long ePUCCH interlace/subframe, following an optional symbol for LBT, frequency multiplexed with long ePUCCH in 1-4 symbols of the same subframe following an optional symbol for LBT, etc.). SRS from different UE(s) can be multiplexed via different cyclic shifts, wherein one of the cyclic shifts can be reserved for channel measurement by processor(s) 1010 based on signaling received via transceiver circuitry 1020.

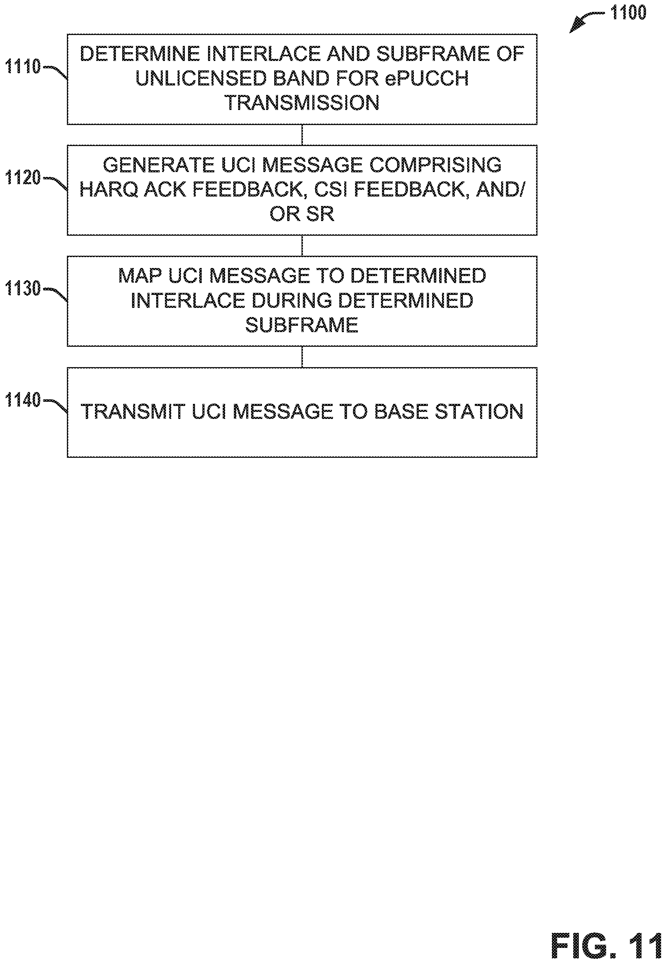

Referring to **FIG. 11****,** illustrated is a flow diagram of a method 1100 that facilitates transmission of UCI over an unlicensed spectrum by a UE, according to various aspects described herein. In some aspects, method 1100 can be performed at a UE. In other aspects, a machine readable medium can store instructions associated with method 1100 that, when executed, can cause a UE to perform the acts of method 1100.

At 1110, a first interlace of a subframe of an unlicensed frequency band can be determined for ePUCCH.

At 1120, a UCI message can be generated comprising HARQ ACK feedback, CSI feedback, and/or SR.

At 1130, the UCI message can be mapped to the first interlace in the subframe.

At 1140, the UCI message can be transmitted to a base station via the first interlace during the subframe.

Additionally or alternatively, method 1100 can include one or more other acts described above in connection with system 900.

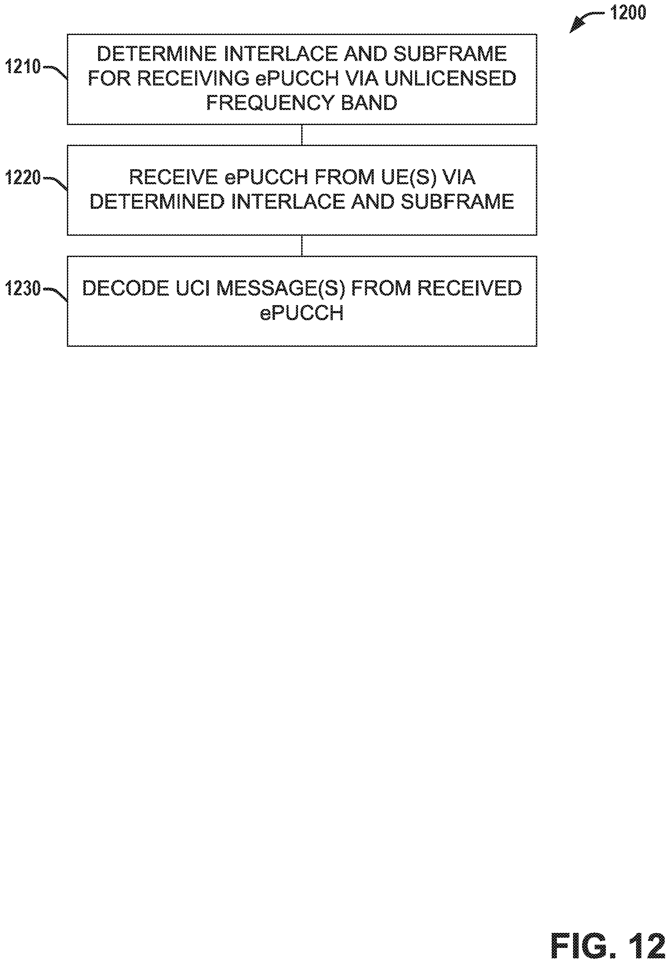

Referring to **FIG. 12****,** illustrated is a flow diagram of a method 1200 that facilitates reception of UCI over an unlicensed spectrum by a base station, according to various aspects described herein. In some aspects, method 1200 can be performed at an eNB. In other aspects, a machine readable medium can store instructions associated with method 1200 that, when executed, can cause an eNB to perform the acts of method 1200.

At 1210, an interlace and subframe can be determined for receiving ePUCCH from a UE.

At 1220, ePUCCH can be received via the determined interlace during the determined subframe.

At 1230, one or more UCI messages can be decoded from the received ePUCCH.

Additionally or alternatively, method 1200 can include one or more other acts described above in connection with system 1000.

Examples herein can include subject matter such as a method, means for performing acts or blocks of the method, at least one machine-readable medium including executable instructions that, when performed by a machine (e.g., a processor with memory, an application-specific integrated circuit (ASIC), a field programmable gate array (FPGA), or the like) cause the machine to perform acts of the method or of an apparatus or system for concurrent communication using multiple communication technologies according to embodiments and examples described.

The invention is defined by the appended claims.

## Claims

1. An apparatus (900) for a User Equipment, UE (100), the apparatus (900) comprising:
means for generating a short enhanced Physical Uplink Control Channel, sPUCCH, in a slot via a first interlace of an unlicensed frequency band, the first interlace comprising a plurality of non-contiguous Resource Blocks, RBs, equally spaced in a frequency domain;
means for generating (1120) an Uplink Control Information, UCI, message for the unlicensed frequency band, the UCI message comprising one or more of Hybrid Automatic Repeat Request Acknowledgement, HARQ ACK, feedback, or Channel State Information, CSI;
means for mapping (1130) the UCI message to the first interlace for the sPUCCH; and
means for transmitting the UCI message to a base station via the first interlace,
wherein:
the slot is the second slot of a subframe;
the sPUCCH consists of the last n symbols of the slot, where n is equal to one, two, three or four; and
a listen before talk, LBT, procedure is performed during the symbol preceding the n symbols of the sPUCCH.

2. The apparatus (900) of claim 1, further comprising:
means for mapping the UCI message to a final two symbols of the sPUCCH, wherein the sPUCCH consists of the last four symbols of the slot.

3. The apparatus (900) of any of claims 1-2, further comprising:
means for mapping Demodulation Reference Signals, DM-RS, to a first two symbols of the sPUCCH, wherein the sPUCCH consists of the last four symbols of the slot.

4. The apparatus (900) of any of claims 1-3, further comprising:
means for generating a Physical Uplink Shared Channel, PUSCH, in the slot via one or more distinct interlaces, each distinct interlace, of the one or more distinct interlaces, comprising a distinct plurality of additional non-contiguous RBs equally spaced in the frequency domain, and each distinct plurality is distinct from the plurality of non-contiguous RBs of the first interlace; and
means for mapping uplink, UL, data to the one or more distinct interlaces for the PUSCH.

5. An apparatus (1000) for a base station, the apparatus (1000) comprising:
means for determining (1210) a first interlace of a slot of an unlicensed frequency band associated with a short enhanced Physical Uplink Control Channel, sPUCCH, the first interlace comprising a plurality of non-contiguous Resource Blocks, RBs, equally spaced in a frequency domain having an Uplink Control Information, UCI, message mapped to the first interlace for the sPUCCH; and
means for decoding (1230) one or more UCI messages from the sPUCCH, wherein:
the one or more UCI messages are associated with one or more UEs; the UCI message comprises one of more of Hybrid Automatic Repeat Request Acknowledgement, HARQ ACK, feedback or Channel State Information, CSI;
the slot is the second slot of a subframe;
the sPUCCH consists of the last n symbols of the slot, where n is equal to one, two, three or four; and
a listen before talk, LBT, procedure is performed during the symbol preceding the n symbols of the sPUCCH.

6. The apparatus (1000) of claim 1, wherein the one or more UCI messages correspond to a final two symbols of the sPUCCH and the sPUCCH consists of the last four symbols of the slot.

7. The apparatus (1000) of any of claims 5-6, wherein a first two symbols of the sPUCCH correspond to Demodulation Reference Signals, DM-RS and the sPUCCH consists of the last four symbols of the slot.

8. The apparatus (1000) of any of claims 5-7, wherein the slot further comprises a Physical Uplink Shared Channel, PUSCH, interlaced via one or more distinct interlaces, the PUSCH comprising a distinct plurality of additional non-contiguous RBs equally spaced in the frequency domain, and each distinct plurality is distinct from the plurality of non-contiguous RBs of the first interlace.

## Patentansprüche

1. Vorrichtung (900) für eine Benutzervorrichtung, UE (100), wobei die Vorrichtung (900) umfasst:
Mittel zum Erzeugen eines short enhanced Physical Uplink Control Channels, sPUCCH, in einem Schlitz über ein erstes Interlace eines nicht lizenzierten Frequenzbands, wobei das erste Interlace eine Vielzahl von nicht zusammenhängenden Ressourcenblöcken, RBs, umfasst, die in einer Frequenzdomäne gleichmäßig beabstandet sind;
Mittel zum Erzeugen (1120) einer Uplink Control Information-, UCI-, Nachricht für das nicht lizenzierte Frequenzband, wobei die UCI-Nachricht eines oder mehrere von Hybrid Automatic Repeat Request Acknowledgement-, HARQ ACK-, Feedback oder Channel State Information, CSI, umfasst;
Mittel zum Abbilden (1130) der UCI-Nachricht auf das erste Interlace für den sPUCCH; und
Mittel zum Übertragen der UCI-Nachricht an eine Basisstation über das erste Interlace,
wobei:
der Schlitz der zweite Schlitz eines Unterrahmens ist;
der sPUCCH aus den letzten n Symbolen des Schlitzes besteht, wobei n gleich eins, zwei, drei oder vier ist; und
eine Listen Before Talk-, LBT-, Prozedur während des Symbols durchgeführt wird, das den n Symbolen des sPUCCH vorausgeht.

2. Vorrichtung (900) nach Anspruch 1, ferner umfassend:
Mittel zum Abbilden der UCI-Nachricht auf die letzten zwei Symbole des sPUCCH, wobei der sPUCCH aus den letzten vier Symbolen des Schlitzes besteht.

3. Vorrichtung (900) nach einem der Ansprüche 1-2, ferner umfassend:
Mittel zum Abbilden von Demodulationsreferenzsignalen, DM-RS, auf die ersten zwei Symbole des sPUCCH, wobei der sPUCCH aus den letzten vier Symbolen des Schlitzes besteht.

4. Vorrichtung (900) nach einem der Ansprüche 1-3, ferner umfassend:
Mittel zum Erzeugen eines Physical Uplink Shared Channels, PUSCH, in dem Schlitz über ein oder mehrere verschiedene Interlaces, wobei jedes verschiedene Interlace des einen oder der mehreren verschiedenen Interlaces eine verschiedene Vielzahl von zusätzlichen nicht zusammenhängenden RBs umfasst, die in der Frequenzdomäne gleichmäßig beabstandet sind, und jede verschiedene Vielzahl von der Vielzahl von nicht zusammenhängenden RBs des ersten Interlaces verschieden ist; und
Mittel zum Abbilden von Uplink-, UL-, Daten auf das eine oder die mehreren verschiedenen Interlaces für den PUSCH.

5. Vorrichtung (1000) für eine Basisstation, wobei die Vorrichtung (1000) umfasst:
Mittel zum Bestimmen (1210) eines ersten Interlaces eines Schlitzes eines nicht lizenzierten Frequenzbands, das mit einem short enhanced Physical Uplink Control Channel, sPUCCH, assoziiert ist, wobei das erste Interlace eine Vielzahl von nicht zusammenhängenden Ressourcenblöcken, RBs, umfasst, die in einer Frequenzdomäne gleichmäßig beabstandet sind und eine Uplink Control Information-, UCI-, Nachricht aufweisen, die auf das erste Interlace für den sPUCCH abgebildet ist; und
Mittel zum Decodieren (1230) einer oder mehrerer UCI-Nachrichten aus dem sPUCCH,
wobei:
die eine oder die mehreren UCI-Nachrichten mit einer oder mehreren UEs assoziiert sind;
die UCI-Nachricht eines oder mehrere von Hybrid Automatic Repeat Request Acknowledgement-, HARQ ACK-, Feedback oder Channel State Information, CSI, umfasst;
der Schlitz der zweite Schlitz eines Unterrahmens ist;
der sPUCCH aus den letzten n Symbolen des Schlitzes besteht, wobei n gleich eins, zwei, drei oder vier ist; und
eine Listen Before Talk-, LBT-, Prozedur während des Symbols durchgeführt wird, das den n Symbolen des sPUCCH vorausgeht.

6. Vorrichtung (1000) nach Anspruch 1, wobei die eine oder die mehreren UCI-Nachrichten den letzten zwei Symbolen des sPUCCH entsprechen und der sPUCCH aus den letzten vier Symbolen des Schlitzes besteht.

7. Vorrichtung (1000) nach einem der Ansprüche 5-6, wobei die ersten zwei Symbole des sPUCCH Demodulationsreferenzsignalen, DM-RS, entsprechen und der sPUCCH aus den letzten vier Symbolen des Schlitzes besteht.

8. Vorrichtung (1000) nach einem der Ansprüche 5-7, wobei der Schlitz ferner einen Physical Uplink Shared Channel, PUSCH, umfasst, der über ein oder mehrere verschiedene Interlaces verschachtelt ist, wobei der PUSCH eine verschiedene Vielzahl von zusätzlichen nicht zusammenhängenden RBs umfasst, die in der Frequenzdomäne gleichmäßig beabstandet sind, und jede verschiedene Vielzahl von der Vielzahl von nicht zusammenhängenden RBs des ersten Interlaces verschieden ist.

## Revendications

1. Un appareil (900) pour un équipement utilisateur, UE (100), l'appareil (900) comprenant :
des moyens pour générer un canal de contrôle de liaison montante physique améliorée raccourcie, sPUCCH, dans un slot via un premier entrelacement d'une bande de fréquences sans licence, le premier entrelacement comprenant une pluralité de blocs de ressources, RB, non contigus identiquement espacés dans un domaine fréquentiel ;
des moyens pour générer (1120) un message d'information de contrôle de liaison montante, UCI, pour la bande de fréquences sans licence, le message UCI comprenant un ou plusieurs parmi un retour d'accusé de réception de requête de répétition automatique hybride, HARQ ACK, ou une information d'état de canal, CSI ;
des moyens pour mapper (1130) le message UCI vers le premier entrelacement pour le sPUCCH ; et
des moyens pour transmettre le message UCI à une station de base via le premier entrelacement,
dans lequel :
le slot est le second slot d'une sous-trame ;
le sPUCCH est constitué des n derniers symboles du slot, n valant un, deux, trois ou quatre ; et
une procédure d'écoute avant émission, LBT, est exécutée durant le symbole précédant les n symboles du sPUCCH.

2. L'appareil (900) de la revendication 1, comprenant en outre :
des moyens pour mapper le message UCI vers deux symboles finals du sPUCCH, le sPUCCH étant constitué des quatre derniers symboles du slot.

3. L'appareil (900) de l'une des revendications 1 à 2, comprenant en outre :
des moyens pour mapper des signaux de référence de démodulation, DM-RS vers les deux premiers symboles du sPUCCH, le sPUCCH étant constitué des quatre derniers symboles du slot.

4. L'appareil (900) de l'une des revendications 1 à 3, comprenant en outre :
des moyens pour générer un canal partagé de liaison montante physique, PUSCH, dans le slot via un ou plusieurs entrelacements distincts, chaque entrelacement distinct des un ou plusieurs entrelacements distincts comprenant une pluralité distincte de RB non contigus supplémentaires identiquement espacés dans le domaine fréquentiel, et chaque pluralité distincte étant distincte de la pluralité de RB non contigus du premier entrelacement ; et
des moyens pour mapper des données de liaison montante, UL, vers les un ou plusieurs entrelacements distincts pour le PUSCH.

5. Un appareil (1000) pour une station de base, l'appareil (1000) comprenant :
des moyens pour déterminer (1210) un premier entrelacement d'un slot d'une bande de fréquences non licenciée associé à un canal de contrôle de liaison montante physique améliorée raccourcie, sPUCCH, le premier entrelacement comprenant une pluralité de blocs de ressources, RB, non contigus identiquement espacés dans un domaine fréquentiel avec un message d'information de contrôle de liaison montante, UCI, mappé vers le premier entrelacement pour le sPUCCH ; et
des moyens pour décoder (1230) un ou plusieurs messages UCI depuis le sPUCCH,
dans lequel :
les un ou plusieurs messages UCI sont associés à un ou plusieurs UE ;
le message UCI comprend un ou plusieurs parmi un retour d'accusé de réception de requête de répétition automatique hybride, HARQ ACK ou une information d'état de canal, CSI ;
le slot est le second slot d'une sous-trame ;
le sPUCCH est constitué des n derniers symboles du slot, n valant un, deux, trois ou quatre ; et
une procédure d'écoute avant émission, LBT, est exécutée durant le symbole précédant les n symboles du sPUCCH.

6. L'appareil (1000) de la revendication 5, dans lequel les un ou plusieurs messages UCI correspondent aux deux symboles finals du sPUCCH, et le sPUCCH est constitué des quatre derniers symboles du slot.

7. L'appareil (1000) de l'une des revendications 5 à 6, dans lequel les deux premiers symboles du sPUCCH correspondent à des signaux de référence de démodulation, DM-RS, et le sPUCCH est constitué des quatre derniers symboles du slot.

8. L'appareil (1000) de l'une des revendications 5 à 7, dans lequel le slot comprend en outre un canal partagé de liaison montante physique, PUSCH, via un ou plusieurs entrelacements distincts, le PUSCH comprenant une pluralité distincte de RB non contigus supplémentaires identiquement espacés dans le domaine fréquentiel, et chaque pluralité distincte étant distincte de la pluralité de RB non contigus du premier entrelacement.
